(19) Europäisches Patentamt
European Patent Office
Office européen des brevets

(11) **EP 2 700 443 B1**

(12) **EUROPEAN PATENT SPECIFICATION**

(45) Date of publication and mention
of the grant of the patent:
**16.09.2015 Bulletin 2015/38**

(51) Int Cl.:
**B01F 7/00** *(2006.01)*  **B01F 15/00** *(2006.01)*
**B01F 3/12** *(2006.01)*  **H01M 4/04** *(2006.01)*

(21) Application number: **13180669.7**

(22) Date of filing: **16.08.2013**

(54) **Kneading device and kneading method for electricity storage material**

Knetvorrichtung und Knetverfahren für Stromspeichermaterial

Dispositif de malaxage et procédé de malaxage pour matériau de stockage d'électricité

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.08.2012 JP 2012184010**

(43) Date of publication of application:
**26.02.2014 Bulletin 2014/09**

(73) Proprietor: **JTEKT CORPORATION
Osaka-shi
Osaka 542-8502 (JP)**

(72) Inventors:
• **Mio, Takumi
Osaka-shi,, Osaka 542-8502 (JP)**
• **Nishi, Koji
Osaka-shi,, Osaka 542-8502 (JP)**
• **Matsuura, Takashi
Osaka-shi,, Osaka 542-8502 (JP)**
• **Fukaya, Yoshifumi
Osaka-shi,, Osaka 542-8502 (JP)**

(74) Representative: **TBK
Bavariaring 4-6
80336 München (DE)**

(56) References cited:
**DE-A1- 2 216 986**   **JP-A- H01 320 761**
**JP-A- 2007 222 711**   **US-A- 5 599 102**
**US-A1- 2009 110 788**   **US-B1- 6 572 262**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 700 443 B1

**Description**

The invention relates to a kneading device that kneads an electricity storage material, and a kneading method for kneading an electricity storage material.

In recent years, a lithium-ion secondary battery is applied to a hybrid vehicle, an electric vehicle, and so on. An electrode of a lithium-ion secondary battery is produced by applying slurry of an active material (an electricity storage material) to a base material such as an aluminum foil, and then drying the slurry. The slurry of the active material is produced by kneading a solid portion such as powder of an active material into a liquid portion.

Document JP 05-054886 A describes a method for producing powder of an active material, a particle size of which is controlled by applying a given motion energy to particles of the active material using a fluid energy mill so that the particles are collided with a wall of the mill or with each other, and then the particles are pulverized. Thus, it is possible to obtain powder of the active material, while suppressing particle deformation. However, JP 05-054886 A does not describe kneading for producing slurry of an active material.

Document JP 01-0320761 A describes a kneading method in which a solid portion such as powder of an active material is mixed in a dry state in advance, and then a mixed liquid portion is added to, and kneaded with the liquid portion. Thus, partial aggregation of the powder of the active material or the like is prevented, and slurry of an active material with a uniform viscosity is obtained.

Generally, as a viscosity of slurry is lower, the initial performance of a battery is higher, but it is more difficult to appropriately perform an applying step and a drying step after the kneading step. Therefore, the viscosity of the slurry may be used as indexes of initial performance of a battery and practicability of the applying step and drying step. However, it is known that durability (repeating charge/discharge characteristics) of a battery changes even when kneading is performed to have the same viscosity of slurry. Therefore, it is difficult to obtain good battery performance only by managing the viscosity of slurry.

It is the object of the invention to provide a kneading device and a kneading method that are able to knead an electricity storage material that improves durability of a battery.

The object of the invention is achieved by a kneading device according to claim 1 and by a method according to claim 3, respectively.

According to a feature of an example of the invention, there is provided a kneading device that kneads an electricity storage material, the kneading device including: index setting means for setting an index for kneading based on a motion energy of particles of the electricity storage material, a mean free path of the particles of the electricity storage material, and a kneading time for the electricity storage material; condition setting means for setting a condition for the kneading based on the set index for kneading; and kneading controlling means for controlling the kneading of the electricity storage material based on the set condition for the kneading.

The foregoing and further objects, features and advantages of the invention will become apparent from the following description of example embodiments with reference to the accompanying drawings, wherein like numerals are used to represent like elements and wherein:

FIG. 1 is an axial sectional view of a kneading device including a kneading control device according to an embodiment of the invention;
FIG. 2 is a sectional view taken along a line A-A in FIG. 1;
FIG. 3 is a sectional view taken along a line B-B in FIG. 1;
FIG. 4 is a schematic block diagram of the kneading control device that controls kneading;
FIG. 5 is a flowchart for explaining operations of the kneading control device;
FIG. 6 is a view showing a relation between a capacity retention ratio of a battery, in other words, durability (repeating charge/discharge characteristics) of a battery, and a viscosity of slurry of an active material; and
FIG. 7 is a view showing a relation between the capacity retention ratio of the battery and an accumulated collision energy of the active material.

Hereinafter, embodiments of the invention will be described with reference to the accompanying drawings.

A kneading device for an electricity storage material according to the embodiment constitutes, for example, a device for producing electrodes (a positive electrode and a negative electrode) of a lithium-ion secondary battery. Electrodes of a lithium-ion secondary battery are produced by applying slurry of an active material as an electricity storage material onto a base material such as an aluminum foil and a copper foil, and then drying the slurry. The slurry of the active material is produced by kneading a solid portion such as powder of the active material with a liquid portion. The kneading device according to this embodiment is a device that produces the slurry of the active material. Specific examples of the active material for a positive electrode include N-methylpyrrolidone as a liquid portion, and an active material such as lithium-nickel oxide, a conductive material such as acetylene black, and a binder such as polyvinylidene fluoride, as a solid portion. Specific examples of the active material for a negative electrode include water as a liquid portion, and an active material such as graphite, a thickening agent such as carboxymethylcellulose, and a binder such as styrene-butadiene rubber (SBR) and a polyacrylic acid, as a solid portion.

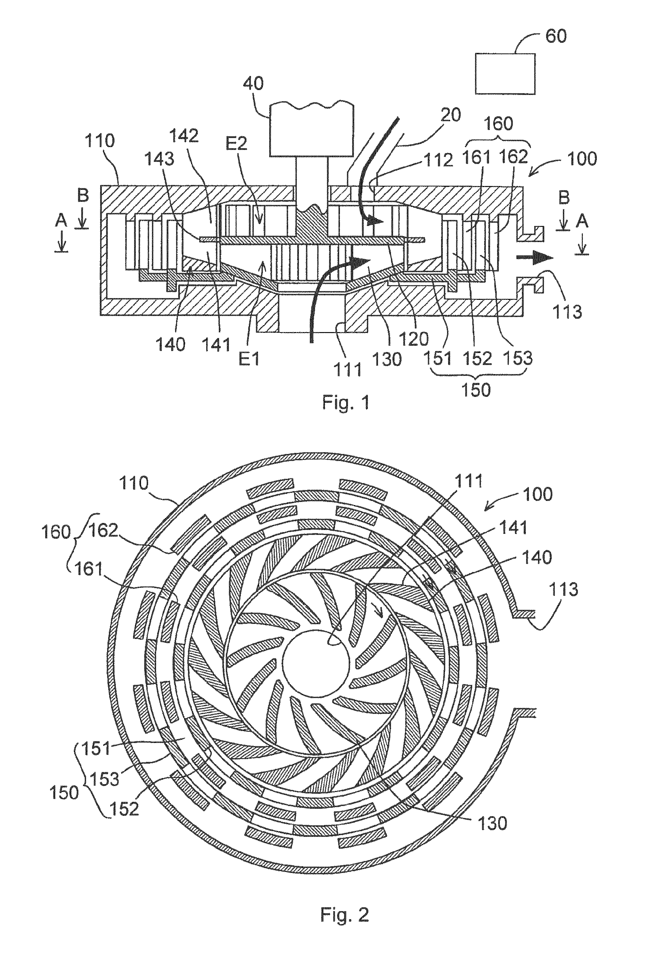

The kneading device for an electricity storage material according to the embodiment will be described with reference to FIG. 1 to FIG. 3. In the kneading device, a liquid portion is suctioned into a housing 110 from the bottom in FIG. 1, a solid portion is suctioned into the housing 110 from above in FIG. 1, and the liquid portion and the solid portion are kneaded inside the housing 110, and thus slurry is produced. Then, the produced slurry is discharged to a radially outer side from an outer peripheral surface of the housing 110.

As shown in FIG. 1, the kneading device includes a device body 100, a powder hopper 20 that houses the solid portion, a drive motor 40, and a kneading control device 60. The powder hopper 20, and the drive motor 40 are supported by the housing 110 of the device body 100. The device body 100 includes the housing 110, a partition panel 120, rotary vanes 130, a guide member 140, a first circular kneading member 150, and a second circular kneading member 160.

The housing 110 is formed in a hollowed disc shape. In a center of a bottom surface of the housing 110, a liquid portion suction opening 111, through which the liquid portion is suctioned, is formed. In the vicinity of a center of a top surface of the housing 110, a discharge end of the powder hopper 20 for the solid portion is able to be fitted, and a solid portion suction opening 112, through which the solid portion is suctioned from the powder hopper 20, is formed. Inside the housing 110, the liquid portion suctioned through the liquid portion suction opening 111, and the solid portion suctioned through the solid portion suction opening 112 are kneaded, and thus, slurry is produced. A discharge opening 113, through which the slurry produced in the housing 110 is discharged, is formed in a part of the outer peripheral surface of the housing 110.

The partition panel 120 is formed in a disc shape, and a center portion of the partition panel 120 is fixed to an end portion of a rotary shaft of the drive motor 40. The partition panel 120 is arranged inside the housing 110 so as to be rotatable about a central axis of the partition panel 120. The partition panel 120 defines upper and lower sides in an area near a center inside the housing 110, and thus, divides the area near the center inside the housing 110 into an area E1 (a liquid portion side area) on a side of the liquid portion suction opening 111 located on the lower side, and an area E2 (solid portion side area) on a side of the solid portion suction opening 112 located on the upper side. The drive motor 40 is fixed to the top surface side of the device body 100.

The plurality of rotary vanes 130 are provided in a circumferential direction at positions on a radially outer side in a bottom surface of the partition panel 120. In other words, the rotary vanes 130 rotate with rotation of the partition panel 120. The rotary vanes 130 function as pump vanes that deliver the liquid portion, which has been suctioned through the liquid portion suction opening 111 located on a radially inner side, to the radially outer side. Each of the rotary vanes 130 is formed so that a phase is shifted in a direction opposite to a rotating direction of the rotary vanes 130 toward the radially outer side. In FIG. 2, since the rotary vanes 130 rotate in a clockwise direction, the phase of each of the rotary vanes 130 is shifted in a counterclockwise direction toward the radially outer side.

The guide member 140 is arranged radially outside the partition panel 120 (i.e., the guide member 140 is arranged downstream of the partition panel 120 and the rotary vanes 130), and fixed to the housing 110. The guide member 140 has a liquid portion guide passage 141 that delivers the liquid portion, which has been delivered from the rotary vanes 130, further toward a kneading area on the radially outer side, at increased speed. The liquid portion guide passage 141 is formed so that a phase is shifted in the rotating direction of the rotary vanes 130 toward the radially outer side. In other words, the rotary vanes 130, and the liquid portion guide passage 141 of the guide member 140 function as a so-called diffuser pump. The liquid portion guide passage 141 is formed so that a flow passage sectional area is reduced toward the radially outer side. Since the flow passage sectional area of the liquid portion guide passage 141 is reduced toward a downstream side, a speed of the liquid portion is increased further.

The guide member 140 also has a solid portion guide passage 142 that guides the solid portion in the solid portion side area E2 toward the kneading area located on the radially outer side. The solid portion guide passage 142 is formed so that at least a radially inner side of the solid portion guide passage 142 is independent from the liquid portion guide passage 141 through a partition portion 143. A radially outer side of the solid portion guide passage 142 is communicated with a radially outer side of the liquid portion guide passage 141. In other words, as the liquid portion flows in the kneading area located radially outside the liquid portion guide passage 141, the solid portion in the solid portion side area E2 is guided to the kneading area through the solid portion guide passage 142.

The solid portion guide passage 142 is formed so as to extend in the same direction as the direction in which the liquid portion guide passage 141 extends, and therefore, a phase is shifted in the rotating direction of the rotary vanes 130 toward the radially outer side. Further, the solid portion guide passage 142 is formed so that a flow passage sectional area of the solid portion guide passage 142 is reduced toward the radially outer side. By forming the liquid portion guide passage 141 and the solid portion guide passage 142 as above, the solid portion in the solid portion side area E2 is guided to the kneading area more effectively. Further, since the flow passage sectional area of the solid portion guide passage 142 is reduced toward the downstream side, the solid portion is guided to the kneading area more easily.

The first circular kneading member 150 is formed in a circular shape with a through-hole at the center, and integrally connected to lower edges of the rotary vanes 130. The first circular kneading member 150 includes a disc portion 151, first inner peripheral side projecting teeth 152, and first outer peripheral side projecting teeth 153. The disc portion 151 is connected to the lower edges of the rotary vanes 130, and a central hole of the disc portion 151 is communicated with the liquid portion suction opening 111. The plurality of first inner peripheral side projecting teeth 152 are arranged in the kneading area located radially outside the guide member 140 (i.e., downstream of the guide member 140), and formed in a circumferential direction so as to project axially upwardly (in a direction perpendicular to a direction in which the slurry flows) from a top surface of the disc portion 151. The plurality of first outer peripheral side projecting teeth 153 are formed in the circumferential direction so that the first outer peripheral side projecting teeth 153 are located radially outside the first inner peripheral side projecting teeth 152, and project axially upwardly from an outer peripheral edge of the disc portion 151.

Tips of the first inner peripheral side projecting teeth 152 and the first outer peripheral side projecting teeth 153 are slightly spaced from an inner surface of the housing 110 so as to be rotatable relative to the inner surface of the housing 110. Circumferential edge faces of the first inner peripheral side projecting teeth 152 and the first outer peripheral side projecting teeth 153 are formed so that a gap width between tip sides of the first inner peripheral side projecting teeth 152 adjacent to each other in the circumferential direction is substantially the same as a gap width between root sides of the first inner peripheral side projecting teeth 152 adjacent to each other in the circumferential direction, and a gap width between tip sides of the first outer peripheral side projecting teeth 153 adjacent to each other in the circumferential direction is substantially the same as a gap width between root sides of the first outer peripheral side projecting teeth 153 adjacent to each other in the circumferential direction.

The second circular kneading member 160 operates relatively to the first circular kneading member 150, and thus, the second circular kneading member 160 kneads the slurry. The second circular kneading member 160 is fixed to the inner surface of the housing 110, and includes second inner peripheral side projecting teeth 161, and second outer peripheral side projecting teeth 162. The plurality of second inner peripheral side projecting teeth 161 and the second outer peripheral side projecting teeth 162 are formed in a circumferential direction so as to project axially downwardly (in a direction opposite to the direction in which the first inner peripheral side projecting teeth 152 project) from the inner surface of the housing 110.

The second inner peripheral side projecting teeth 161 are arranged between the first inner peripheral side projecting teeth 152 and the first outer peripheral side projecting teeth 153 in a radial direction so that the second inner peripheral side projecting teeth 161 are opposed to the first inner peripheral side projecting teeth 152 and the first outer peripheral side projecting teeth 153 in the direction in which the slurry flows. The second outer peripheral side projecting teeth 162 are arranged radially outside the first outer peripheral side projecting teeth 153 so that the second outer peripheral side projecting teeth 162 are opposed to the first outer peripheral side projecting teeth 153 in the direction in which the slurry flows.

Tips of the second inner peripheral side projecting teeth 161 and the second outer peripheral side projecting teeth 162 are slightly spaced from the disc portion 151 of the first circular kneading member 150. Circumferential edge faces of the second inner peripheral side projecting tooth 161 and the second outer peripheral side projecting tooth 162 are formed so that a gap width between tip sides of the second inner peripheral side projecting teeth 161 adjacent to each other in the circumferential direction is substantially the same as a gap width between root sides of the second inner peripheral side projecting teeth 161 adjacent to each other in the circumferential direction, and a gap width between tip sides of the second outer peripheral side projecting teeth 162 adjacent to each other in the circumferential direction is substantially the same as a gap width between root sides of the second outer peripheral side projecting teeth 162 adjacent to each other in the circumferential direction.

Operations of the kneading device described above will be explained. When the drive motor 40 operates, the partition panel 120, the rotary vanes 130, and the first circular kneading member 150 rotate with respect to the housing 110. Meanwhile, the guide member 140 and the second circular kneading member 160 are fixed to the housing 110, and thus do not rotate.

When the rotary vanes 130 rotate, the rotary vanes 130 and the guide member 140 function as a diffuser pump, and the liquid portion is suctioned from the liquid portion suction opening 111 into the liquid portion side area E1. The suctioned liquid portion passes through the rotary vanes 130 and the liquid portion guide passage 141, and is delivered into the kneading area. As the liquid portion flows, the solid portion is suctioned from the solid portion suction opening 112 into the solid portion side area E2. The suctioned solid portion passes through the solid portion guide passage 142 and is guided into the kneading area.

The first circular kneading member 150 and the second circular kneading member 160 are arranged in the kneading area. The first inner peripheral side projecting teeth 152, the second inner peripheral side projecting teeth 161, the first outer peripheral side projecting teeth 153, and the second outer peripheral side projecting teeth 162 are arranged in this order from the radially inner side to the radially outer side, and rotate relative to each other. Therefore, the liquid portion and the solid portion delivered from the guide member 140 are dispersed by shearing forces of the projecting teeth 152, 153, 161, and 162, while being kneaded. The slurry that has passed through the second outer peripheral side projecting teeth 162 is discharged from the discharge opening 113. Thus, the slurry is produced. By repeating the above operations, slurry that is previously produced is suctioned from the liquid portion suction opening 111, and kneaded again with the solid portion.

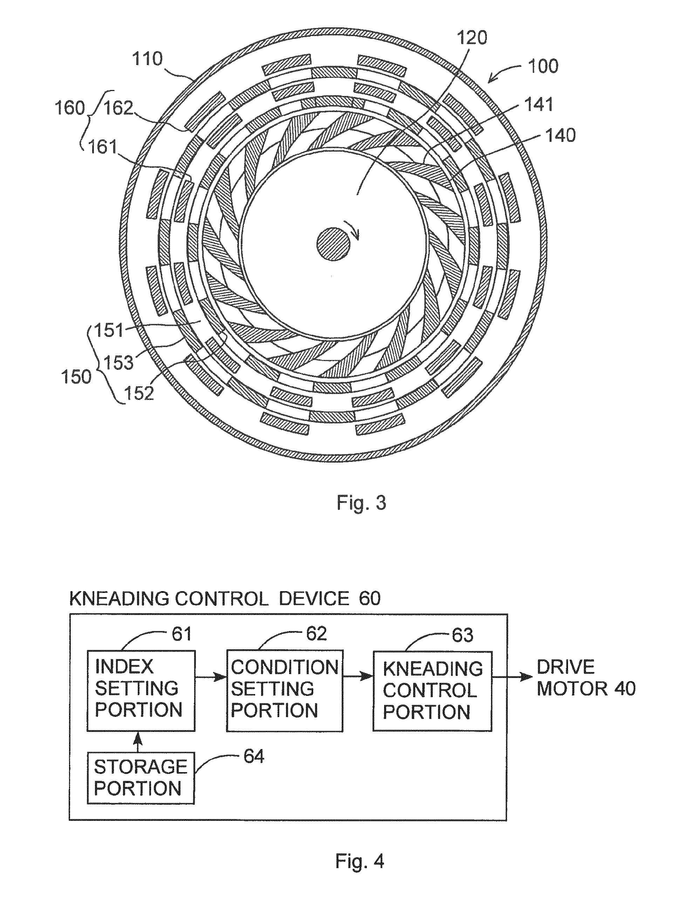

Next, the kneading control device 60 will be described with reference to FIG. 4. The kneading control device 60 is configured to include an index setting portion 61, a condition setting portion 62, a kneading control portion 63, and a storage portion 64. Each of the index setting portion 61, the condition setting portion 62, the kneading control portion 63, and the storage portion 64 may be configured by individual hardware, or may be realized by software.

Although details will be described later, the index setting portion 61 sets an index for kneading based on a motion energy of particles of the active material, a mean free path of particles of the active material, and a kneading time for the active material (i.e., the kneading time during which the active material is kneaded). The condition setting portion 62 sets conditions for kneading so that the set index for kneading becomes smaller than or equal to a target value. The kneading control portion 63 controls kneading of the active material in accordance with the conditions for kneading that have been set. The storage portion 64 stores a later-described equation (1) to obtain the index for kneading.

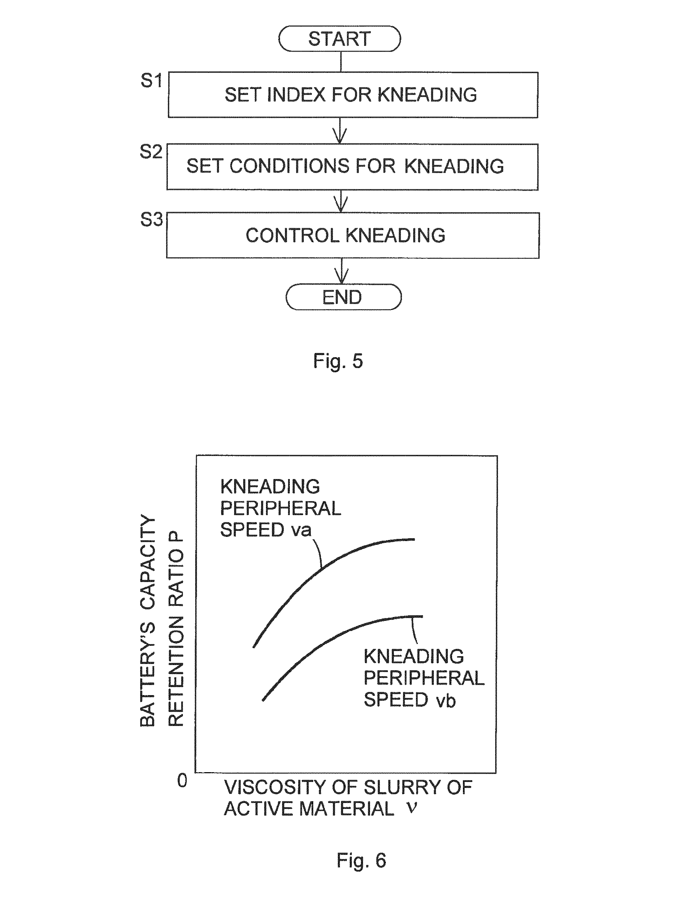

Setting of the index and conditions for kneading will be described. As evident from an experimental result in FIG. 6, a battery's capacity retention ratio P, in other words, durability (repeating charge/discharge characteristics) of the battery is increased as a viscosity $\nu$ of the slurry of the active material increases. However, when a kneading peripheral speed v of the first and second circular kneading members 150 and 160 of the kneading device is increased (va < vb), the battery's capacity retention ratio P is reduced even if the slurry of the active material is kneaded to have the same viscosity $\nu$. As the kneading peripheral speed v of the first and second circular kneading members 150 and 160 increases, the number of collisions of particles of the active material during kneading increases, and thus, the particles of the active material are more likely to be damaged. If the particles of the active material are damaged and split into small pieces, surface areas are increased, and decomposition of an electrolyte solution is accelerated. It is thus considered that damages of particles of an active material are deeply related to the battery's capacity retention ratio P.

It is considered that factors relating to damages of the particles of the active material include a kneading time t for the active material, and a solid content (solid portion / (solid portion + liquid portion)) $\eta$ of the active material, in addition to the kneading peripheral speed v of the first and second circular kneading members 150 and 160. Therefore, the number of collisions of the particles of the active material is obtained by using a model in which the particles of the active material move freely in a given space, based on a known mean free path. As shown in the following equation (1), an accumulated collision energy D of the active material, which serves as the index for kneading, is obtained by multiplying a motion energy $mv^2 / 2$ of the particles of the active material, by the number of collisions $\sqrt{2}\cdot\eta\cdot\sigma\cdot v$ of the particles of the active material, and the kneading time t for the active material. Thus, a damaged state of the particles of the active material during kneading is predicted at a stage before kneading.

$$D=\left(\frac{mv^2}{2}\right) \times \left(\sqrt{2}\,\eta\sigma v\right) \times (t) \quad \cdots (1)$$

In the equation (1), D is the accumulated collision energy of the particles of the active material, m is a single particle weight of the active material, v is the kneading peripheral speed of the first and second circular kneading members 150 and 160, $\eta$ is the solid content of the active material, $\sigma$ is an average particle size of the particles of the active material, and t is the kneading time for the active material.

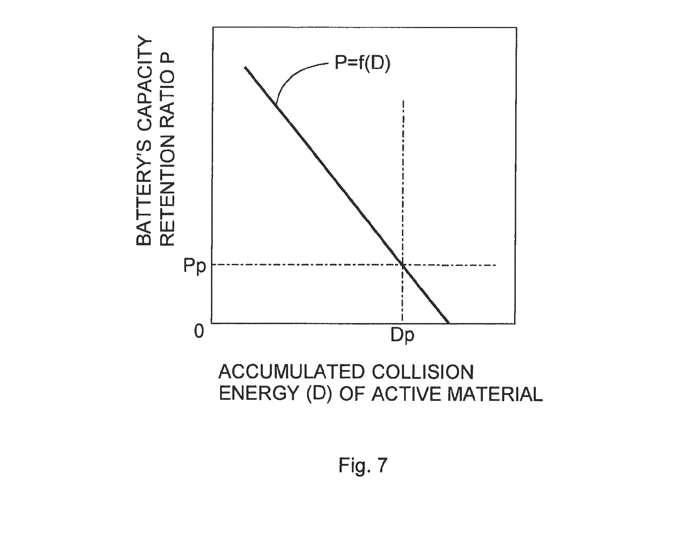

Then, as shown in FIG. 7, a relation between the battery's capacity retention ratio P and the accumulated collision energy D of the active material is obtained. The relation is obtained by adjusting the kneading peripheral speed v of the first and second circular kneading members 150 and 160, the solid content $\eta$ of the active material (the solid content is adjusted by changing a ratio of the solid portion to the liquid portion), and the kneading time t for the active material, which are factors relating to damages of the particles of the active material. Then, a relationship equation P = f (D) is obtained, and an accumulated collision energy Dp of the active material, which corresponds to a battery's minimum required capacity retention ratio Pp, is obtained. Then, the conditions for kneading are set, in other words, the kneading peripheral speed v of the first and second circular kneading members 150 and 160, the solid content $\eta$ of the active material, and the kneading time t for the active material are set so that the accumulated collision energy of the active material becomes smaller than or equal to Dp.

In the foregoing kneading device, the second inner peripheral side projecting teeth 161 of the second circular kneading member 160 are arranged between the first inner peripheral side projecting teeth 152 and the first outer peripheral side projecting teeth 153 of the first circular kneading member 150 in the radial direction so that the second inner peripheral side projecting teeth 161 are opposed to the first inner peripheral side projecting teeth 152 and the first outer peripheral side projecting teeth 153 in the direction in which the slurry flows. The second outer peripheral side projecting teeth 162 of the second circular kneading member 160 are arranged radially outside the first outer peripheral side projecting teeth 153 of the first circular kneading member 150 so that the second outer peripheral side projecting teeth 162 are opposed to the first outer peripheral side projecting tooth 153 in the direction in which the slurry flows. Therefore, by using a kneading peripheral speed v1 between the first inner peripheral side projecting teeth 152 and the second inner peripheral side projecting teeth 161, a kneading peripheral speed v2 between the second inner peripheral side projecting teeth 161 and the first outer peripheral side projecting teeth 153, and a kneading peripheral speed v3 between the first outer peripheral side projecting teeth 153 and the second outer peripheral side projecting teeth 162, accumulated collision energies D1, D2, and D3 of the particles of the active material are obtained, and the sum of the accumulated collision energies D 1 + D2 + D3 is set as an index.

Next, processing performed by the kneading control device 60 will be described with reference to FIG. 5. As shown in FIG. 5, the index for kneading is set based on the motion energy of the particles of the active material, the mean free path of the particles of the active material, and the kneading time for the active material (step S1 that corresponds to the "step of setting an index" in the present invention). Specifically, the index setting portion 61 reads the equation (1) from the storage portion 64, and obtains the accumulated collision energies D1, D2, and D3 of the particles of the active material by using the single particle weight m of the active material, the kneading peripheral speeds v1, v2, and v3 of the first and second circular kneading members 150 and 160, the solid content $\eta$ of the active material, the average particle size $\sigma$ of the particles of the active material, and the kneading time t for the active material. Then, the sum of the accumulated collision energies D1, D2, and D3, that is D1 + D2 + D3, is set as the index.

Next, based on the index for kneading that has been set, conditions for kneading are set (step S2 that corresponds to the "step of setting a condition" in the present invention). More specifically, the condition setting portion 62 sets the conditions for kneading, in other words, the kneading peripheral speeds v1, v2, and v3 of the first and second circular kneading members 150 and 160, the solid content $\eta$ of the active material, and the kneading time t for the active material so that the set index D1 + D2 + D3 becomes smaller than or equal to the target value Dp1 + Dp2 + Dp3, which has been set in advance. This is because it is considered that the particles of the active material are damaged by kneading of the active material at a high speed or for a long time, and that damages of the particles of the active material vary when the solid content of the active material varies.

In accordance with the conditions for kneading that have been set, kneading of the active material is controlled (step S3 that corresponds to the "step of controlling" in the present invention), and then the processing ends. Specifically, the kneading control portion 63 supplies the solid portion and the liquid portion to the kneading device so that the set condition for kneading is satisfied, in other words, the solid content of the active material becomes equal to $\eta$. Then, the kneading control portion 63 controls kneading of the active material by using the set conditions for kneading, in other words, the kneading peripheral speeds v1, v2, and v3 of the first and second circular kneading members 150 and 160, and the kneading time t for the active material.

As described so far, according to this embodiment, the index for kneading is set based on the motion energy of the particles of the active material, the mean free path of the particles of the active material, and the kneading time for the active material. In other words, the number of collisions of the particles of the active material is obtained by using the model in which the particles of the active material move freely in the given space, based on the mean free path of the particles of the active material. Thus, the accumulated collision energy of the active material is obtained by multiplying the number of collisions of the particles of the active material, by the motion energy of the active material and the kneading time for the active material, and the accumulated collision energy is used as the index of durability of the battery. Since the damaged state of the particles of the active material during kneading is predicted at a stage before kneading, it is possible to knead the active material in such a manner that the particles of the active material are less likely to be damaged. Thus, it is possible to produce the battery with high durability.

As the electricity storage material to which the present invention is applied is not limited to the active material that is used for the electrode of the lithium-ion secondary battery, and the present invention may also be applied to other electricity storage materials such as a material for a capacitor. The idea with regard to damages of particles of an active material may also be applied to calculation of a dispersion force of a bead mill, estimation of a service life of beads before replacement, and so on.

A kneading device includes an index setting portion (61) that sets an index for kneading based on a motion energy of particles of an electricity storage material, a mean free path of the particles of the electricity storage material, and a kneading time for the electricity storage material, a condition setting portion (62) that sets a condition for the kneading based on the set index for the kneading, and a kneading control portion (63) that controls the kneading of the electricity storage material in accordance with the set condition for the kneading.

## Claims

1. A kneading device that in use kneads an electricity storage material, comprising a kneading member (152; 153) that is rotatable and that in use kneads the electricity storage material, **characterized in that** the kneading device comprises:

a control device (60) configured to include index setting means (61) for setting an index for kneading based on a motion energy of particles of the electricity storage material, a mean free path of the particles of the electricity storage material, and a kneading time for the electricity storage material, condition setting means (62) for setting a condition for the kneading based on the set index for the kneading, and kneading controlling means (63) for controlling the kneading of the electricity storage material based on the set condition for the kneading , wherein the index setting means is adapted to set an accumulated collision energy of the particles of the electricity storage material as the index for the kneading, based on the equation 2 :

$$D = \left( \frac{mv^2}{2} \right) \times \left( \sqrt{2} \, \eta \sigma v \right) \times (t)$$

where D is the accumulated collision energy of the particles of the electricity storage material, m is a single particle weight of the electricity storage material, v is a kneading peripheral speed of the kneading member, η is a solid content of the electricity storage material, σ is an average particle size of the particles of the electricity storage material, and t is a kneading time for the electricity storage material, wherein the accumulated collision energy of the particles of the electricity storage material (D) is set smaller than or equal to an accumulated collision energy (Dp), which corresponds to a battery's minimum required capacity retention ratio (Pp).

2. The kneading device for the electricity storage material according to claim 1, wherein the condition setting means (63) sets the condition for the kneading by adjusting at least the kneading peripheral speed v of the kneading member, the solid content η of the electricity storage material, and the kneading time t for the electricity storage material.

3. A kneading method for kneading an electricity storage material, comprising:

an index setting step of setting an index for kneading based on a motion energy of particles of the electricity storage material, a mean free path of the particles of the electricity storage material, and a kneading time for the electricity storage material;
a condition setting step of setting a condition for the kneading based on the set index for the kneading; and
a kneading controlling step of controlling the kneading of the electricity storage material in accordance with the set condition for the kneading,
wherein the index setting means sets an accumulated collision energy of the particles of the electricity storage material as the index for the kneading, based on the equation :

$$D = \left( \frac{mv^2}{2} \right) \times \left( \sqrt{2} \, \eta \sigma v \right) \times (t)$$

where D is the accumulated collision energy of the particles of the electricity storage material, m is a single particle weight of the electricity storage material, v is a kneading peripheral speed of the kneading member, η is a solid content of the electricity storage material, σ is an average particle size of the particles of the electricity storage material, and t is a kneading time for the electricity storage material,
wherein the accumulated collision energy of the particles of the electricity storage material (D) is set smaller than or equal to an accumulated collision energy (Dp), which corresponds to a batter's minimum required capacity retention ratio (Pp).

**Patentansprüche**

1. Knetvorrichtung, die in Verwendung ein Elektrizitätsspeichermaterial knetet, mit einem Knetelement (152; 153), das drehbar ist, und das in Verwendung das Elektrizitätsspeichermaterial knetet, **dadurch gekennzeichnet, dass** die Knetvorrichtung umfasst:

eine Steuervorrichtung (60), die konfiguriert ist, ein Indexeinstellmittel (61) zum Einstellen eines Index zum Kneten ausgehend von einer Bewegungsenergie von Partikeln des Elektrizitätsspeichermaterials einer mittleren freien Weglänge der Partikel des Elektrizitätsspeichermaterials und einer Knetzeit für das Elektrizitätsspeichermaterial zu haben,
einem Bedingungseinstellmittel (62) zum Einstellen einer Bedingung für das Kneten ausgehend von dem eingestellten Index für das Kneten, und einem Knetsteuermittel (63) zum Steuern des Knetens des Elektrizitätsspeichermaterials ausgehend von der eingestellten Bedingung für das Kneten, wobei

das Indexeinstellmittel angepasst ist,

eine akkumulierte Kollisionsenergie der Partikel des Elektrizitätsspeichermaterials als Index für das Kneten ausgehend von der Gleichung:

$$D = \left(\frac{mv^2}{2}\right) \times \left(\sqrt{2}\ \eta\sigma v\right) \times (t) \quad \cdots \ (1)$$

in der D die akkumulierte Kollisionsenergie der Partikel des Elektrizitätsspeichermaterials ist, m ein einzelnes Partikelgewicht des Elektrizitätsspeichermaterials ist, v eine Knetrandgeschwindigkeit des Knetelements ist, n ein Feststoffgehalt des Elektrizitätsspeichermaterials ist, σ eine durchschnittliche Partikelgröße der Partikel des Elektrizitätsspeichermaterials ist, und t eine Knetzeit für das Elektrizitätsspeichermaterial ist, wobei die akkumulierte Kollisionsenergie der Partikel des Elektrizitätsspeichermaterials (D) kleiner als oder gleich einer akkumulierten Kollisionsenergie (Dp) eingestellt ist, die einem minimal erforderlichen Kapazitätsbeibehaltungsrate (Pp) einer Batterie entspricht.

2. Knetvorrichtung für das Elektrizität speichernde Material nach Anspruch 1, wobei das Bedingungseinstellmittel (63) die Bedingung zum Kneten durch Anpassen von zumindest der Knetrandgeschwindigkeit v des Knetelements, des Feststoffgehaltteils n des Elektrizität speichernden Materials, und der Knetzeit t für das Elektrizität speichernde Material einstellt.

3. Knetverfahren zum Kneten eines Elektrizität speichernden Materials mit:

einem Indexeinstellschritt, einen Index zum Kneten ausgehend von einer Bewegungsenergie von Partikeln des Elektrizität speichernden Materials, einer mittleren freien Weglänge der Partikel des Elektrizität speichernden Materials und einer Knetzeit für das Elektrizität speichernde Material einzustellen;

einem Bedingungseinstellschritt, eine Bedingung für das Kneten ausgehend von dem eingestellten Index für das Kneten einzustellen; und

einem Knetsteuerschritt, das Kneten des Elektrizität speichernden Materials gemäß der eingestellten Bedingung für das Kneten zu steuern,

wobei das Indexeinstellmittel eine akkumulierte Kollisionsenergie der Partikel des Elektrizität speichernden Materials als Index für das Kneten ausgehend von der Gleichung:

$$D = \left(\frac{mv^2}{2}\right) \times \left(\sqrt{2}\ \eta\sigma v\right) \times (t) \quad \cdots \ (1)$$

einstellt, wo D die akkumulierte Kollisionsenergie der Partikel des Elektrizität speichernden Materials ist, m ein einzelnes Partikelgewicht des Elektrizität speichernden Materials ist, v eine Knetrandgeschwindigkeit des Knetelements ist, n ein Feststoffgehalt des Elektrizität speichernden Materials ist, σ eine durchschnittliche Partikelgröße der Partikel des Elektrizität speichernden Materials ist, und t eine Knetzeit für das Elektrizität speichernde Material ist,

wobei die akkumulierte Kollisionsenergie der Partikel des Elektrizität speichernden Materials (D) kleiner als oder gleich wie eine akkumulierte Kollisionsenergie (Dp) ist, die einem minimal erforderlichen Kapazitätsbeibehaltungsrate (Pp) einer Batterie entspricht.

**Revendications**

1. Dispositif de malaxage qui, en cours d'utilisation, malaxe un matériau de stockage d'électricité, comprenant un élément de malaxage (152 ; 153) qui peut tourner et qui, en cours d'utilisation, malaxe le matériau de stockage d'électricité, **caractérisé en ce que** le dispositif de malaxage comprend :

un dispositif de commande (60) configuré de manière à comporter un moyen de réglage d'indice (61) pour régler un indice pour le malaxage sur la base d'une énergie de mouvement de particules du matériau de stockage d'électricité, d'un libre parcours moyen des particules du matériau de stockage d'électricité, et d'un temps de malaxage pour le matériau de stockage d'électricité,
un moyen de réglage de condition (62) pour régler une condition pour le malaxage sur la base de l'indice réglé pour le malaxage, et un moyen de commande de malaxage (63) pour commander le malaxage du matériau de stockage d'électricité sur la base de la condition réglée pour le malaxage, dans lequel
le moyen de réglage d'indice est adapté pour régler une énergie de collision accumulée des particules du matériau de stockage d'électricité comme étant l'indice pour le malaxage, sur la base de l'équation :

$$D = \left(\frac{mv^2}{2}\right) \times (\sqrt{2}\,\eta\sigma v) \times (t)$$

où D est l'énergie de collision accumulée des particules du matériau de stockage d'électricité, m est un poids de particule unique du matériau de stockage d'électricité, v est une vitesse périphérique de malaxage de l'élément de malaxage, $\eta$ est une teneur en matières solides du matériau de stockage d'électricité, $\sigma$ est la taille moyenne de particules des particules du matériau de stockage d'électricité, et t est un temps de malaxage pour le matériau de stockage d'électricité, où l'énergie de collision accumulée des particules du matériau de stockage d'électricité (D) est réglée de manière à être inférieure ou égale à une énergie de collision accumulée (Dp), qui correspond à un rapport de rétention de capacité requis minimal de la batterie (Pp).

2.  Dispositif de malaxage pour le matériau de stockage d'électricité selon la revendication 1, dans lequel le moyen de réglage de condition (63) règle la condition pour le malaxage en ajustant au moins la vitesse périphérique de malaxage v de l'élément de malaxage, la teneur en matières solides $\eta$ du matériau de stockage d'électricité, et le temps de malaxage t pour le matériau de stockage d'électricité.

3.  Procédé de malaxage pour malaxer un matériau de stockage d'électricité, comprenant :

une étape de réglage d'indice qui consiste à régler un indice pour le malaxage sur la base d'une énergie de mouvement de particules du matériau de stockage d'électricité, d'un libre parcours moyen des particules du matériau de stockage d'électricité, et d'un temps de malaxage pour le matériau de stockage d'électricité ;
une étape de réglage de condition qui consiste à régler une condition pour le malaxage sur la base de l'indice réglé pour le malaxage ; et
une étape de commande de malaxage qui consiste à commander le malaxage du matériau de stockage d'électricité selon la condition réglée pour le malaxage,
dans lequel le moyen de réglage d'indice règle une énergie de collision accumulée des particules du matériau de stockage d'électricité comme étant l'indice pour le malaxage, sur la base de l'équation :

$$D = \left(\frac{mv^2}{2}\right) \times (\sqrt{2}\,\eta\sigma v) \times (t)$$

où D est l'énergie de collision accumulée des particules du matériau de stockage d'électricité, m est un poids de particule unique du matériau de stockage d'électricité, v est une vitesse périphérique de malaxage de l'élément de malaxage, $\eta$ est une teneur en matières solides du matériau de stockage d'électricité, $\sigma$ est la taille moyenne de particules des particules du matériau de stockage d'électricité, et t est un temps de malaxage pour le matériau de stockage d'électricité,
dans lequel l'énergie de collision accumulée des particules du matériau de stockage d'électricité (D) est réglée de manière à être inférieure ou égale à une énergie de collision accumulée (Dp), qui correspond à un rapport de rétention de capacité requis minimal de la batterie (Pp).

Fig. 1

Fig. 2

Fig. 3

KNEADING CONTROL DEVICE 60

Fig. 4

Fig. 5

Fig. 6

Fig. 7

**EP 2 700 443 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5054886 A

- JP 1320761 A